# EUROPEAN PATENT SPECIFICATION

(11) **EP 0 604 221 B1**
(45) Date of publication and mention of the grant of the patent: **02.04.1997**
(21) Application number: 93310435.8
(22) Date of filing: 22.12.1993
(51) Int. Cl.: H01J 61/24, H01J 61/54

(54) **Fluorescent lamp**
Leuchtstofflampe
Lampe fluorescente

(30) Priority: 22.12.1992 US 995280
(43) Date of publication of application: 29.06.1994
(73) Proprietor: FLOWIL INTERNATIONAL LIGHTING (HOLDING) B.V., NL-1077 ZX Amsterdam (NL)
(72) Inventor: Bouchard, Andre C., Peabody, MA 01960 (US)
(74) Representative: Butler, Michael John

(56) References cited:
- EP-A- 0 119 666
- WO-A-93/18542
- GB-A- 2 203 283
- US-A- 3 956 656
- US-A- 4 020 378
- NEUES AUS DER TECHNIK no. 2 , 20 May 1988 , WURZBURG DE pages 3 - 4 -245- 'Niederdruck-Quecksilberdampf-Entlad ungslampe'
- PATENT ABSTRACTS OF JAPAN vol. 9, no. 85 (E-308)(1808) 13 April 1985 & JP-A-59 215 653 (TOSHIBA K.K.) 5 December 1984

## Description

The present invention relates to a fluorescent lamp. More particularly, this invention relates to a fluorescent lamp having an apparatus for decreasing the warm-up time.

In fluorescent lamps, ultraviolet (UV) radiation emitted by a mixture of mercury vapour and a noble gas is converted to visible light by a phosphor coating on the inside surface of a lamp envelope. The lamp envelope is sealed and contains mercury vapour at a few millitorr and an inert starting gas such as argon, krypton, neon, helium, or a mixture of these and other gases. A pair of electrodes located within the envelope emits electrons during starting and supplies electrical energy to a discharge during operation of the lamp. Electrical leads (inlead wires) coupled through the envelope to each of the electrodes supply electrical energy to the electrodes. A ballast inductor is commonly connected in series with the cathode electrode for limiting the current supplied to the lamp. The mercury vapour emits UV radiation which in turn causes the phosphor coating to emit visible light.

Compact fluorescent lamps are configured for mounting in a conventional incandescent lamp socket. Some compact fluorescent lamps use an amalgam contained in an exhaust tube within the lamp envelope to control the mercury vapour pressure and thereby increase the light output of the lamp. Twin tube fluorescent lamps include two substantially parallel tube sections connected at one end. Electrodes are located at the other end of each tube section, and discharge is generated between the electrodes through the full length of each tube section. Double twin tube lamps comprise four substantially parallel tube sections, including two twin tube sections connected through a constriction. A continuous arc is generated between the electrodes through the four tube sections in these lamps.

A recognized drawback associated with such high output compact fluorescent lamps (i.e., those which use an amalgam) is the long warm-up time, the time required for the lamp to become uniformly bright. When the lamp is first turned on, only one end of the lamp glows for a period of time, and gradually the lamp becomes uniformly bright. This drawback occurs because the mercury vapour contained within the lamp envelope recombines with the amalgam at one end of the lamp envelope when the lamp is off. When the lamp is energized, the mercury vapour is initially localized in the region of the amalgam, causing light emission solely from that region, until the mercury vapour thereafter diffuses uniformly throughout the lamp envelope. It can take up to ten minutes or more for the mercury vapour to diffuse throughout the lamp envelope of a high output compact fluorescent lamp, depending on the arc length and ambient temperature of the lamp.

Accordingly, attempts have been made to decrease the warm-up time of high output compact fluorescent lamps by enhancing diffusion of the mercury vapour through the lamp envelope. One such approach involves the use of small starter flags placed in close proximity to the lamp electrodes within the lamp envelope. The flags are made of a thin foil, such as stainless steel, and are coated with indium such that the mercury vapour combines with the indium on the flags when the lamp is turned off. When the lamp is turned on, heat from the electrodes vapourizes the mercury from the flags and the mercury diffuses into the lamp envelope. Although reliable starting and reduced warm-up times result, initial end glowing (near the starter flags and amalgam) and lengthy warm-up times still persist.

Another approach involves the use of an amalgam on small metal plates positioned on connecting wires at an intermediate location along the discharge path as described in "Neues aus der Technik", Vogel Verlag K.G. Würzburg, DE, no. 2, 20/5/88, page 3: "Niederdruck-Quecksilberdampf-Entladungslampe", and according to the preamble of claim 1.

Viewed from one aspect there is provided a fluorescent lamp having an envelope defining a continuous discharge path and a member having a portion positioned at an intermediate location along said discharge path adapted to liberate mercury vapour during warm-up of said lamp, characterised in that the member is elongate, and in that it is attached to a cup containing an amalgam.

The elongate member or probe is preferably located at or near the center of the discharge path. In a preferred embodiment of the present invention, the cup is mounted in an exhaust tube of the lamp envelope so that the elongate member extends into the lamp. The elongate member is preferably coated with indium. The elongate member preferably extends axially along part of the discharge path.
FIG. 1 shows a first embodiment of a stabilization device for reducing the warm-up time of a preferred compact fluorescent lamp in accordance with the present invention, including an alloy retaining cup and a probe attached thereto;
FIG. 2 shows the device of FIG. 1 mounted within a twin tube fluorescent lamp;
FIG. 3 shows a schematic representation of a double twin tube fluorescent lamp incorporating the device of Fig. 1 and illustrates the operation thereof;
FIG. 4 shows a second embodiment of a stabilization device, including a starter flag affixed to one end of a probe;
FIG. 5 shows a third embodiment of a stabilization device, with an end of a probe formed into a U-shape; and
FIG. 6 shows a fourth embodiment of a stabilization device, including an extended length probe.

A stabilization device for use in a high output, compact fluorescent lamp may include a metal probe or elongate member attached to an amalgam retaining cup. The device is mounted within a compact fluorescent lamp at or near the center of the discharge path. The probe is preferably coated with indium and acts as a mercury vapour source during lamp warm-up. Since the probe is located near the center of the discharge path, the mercury vapour rapidly diffuses through the lamp envelope.

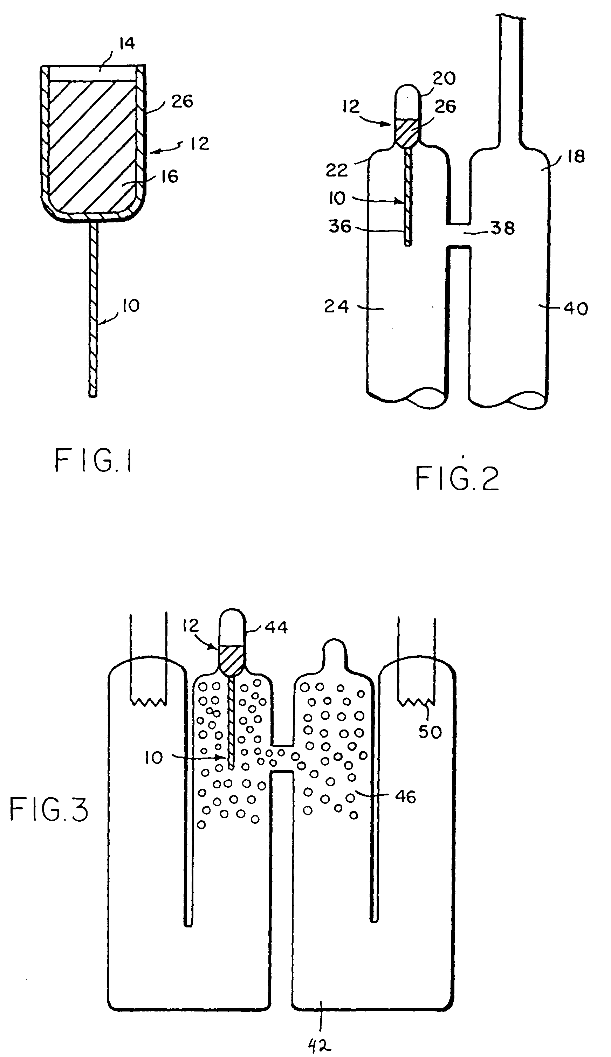

FIG. 1 shows a first embodiment of the starting aid incorporated in preferred embodiments of the present invention including a probe 10 attached to a cup 12 which is open ended at a top portion 14 thereof. The cup 12 retains an amalgam 16. The probe 10 is preferably made from nickel but other metals or metal alloys such as a nickel-iron alloy are suitable. The probe 10 is preferably in the form of a wire having a diameter in a range of about 0.13 mm (0.005 inch) to 0.51 mm (0.020 inch). The probe is preferably coated with indium, but other amalgamating metal coatings are suitable. Alternatively, the probe itself can be made from an amalgamating metal or alloy.

The probe is preferably attached to the cup by welding, but a small hole may be made in the bottom of the cup through which one end of the probe is inserted. Thereafter, molten amalgamating alloy is poured into the cup and allowed to harden around the probe end, thereby affixing the probe to the cup. Other attachment techniques are suitable, as will be appreciated by those skilled in the art.

FIG. 2 shows a lamp assembly including the probe 10 and cup 12 mounted within a twin tube compact fluorescent lamp 18. The cup is mechanically retained within an exhaust tube 20 at one end 22 of a tube section 24. The cup 12 and probe 10 are mounted at the opposite end of tube section 24 from the electrode (not shown). Thus, the cup 12 and probe 10 are located near the center of the discharge path within lamp 18, and the mercury vapour diffuses from cup 12 and probe 10 toward both ends of lamp 18. The cup is substantially cylindrical and its wall 26 contacts the inside surface of exhaust tube 20. The probe extends downwardly into tube section 24, and the end 36 of the probe is preferably located in proximity to a kiss joint or constriction 38 between tube sections 24 and 40.

During operation, when the lamp is turned on, the probe is heated by the lamp discharge, and mercury is freed from the probe to diffuse throughout the lamp. Because of the small diameter of the probe and the low mass of the probe, the probe is heated rapidly and the mercury evaporates rapidly. It is preferred that the bulk of the indium on the probe be concentrated near the end 36 thereof, in proximity to constriction 38, because the temperature is higher in this region of the lamp envelope. For example, a typical constriction region temperature is 140°C as compared to a temperature within the lamp envelope of 85°C. Furthermore, mercury vapour emitted by probe 10 near constriction 38 is likely to diffuse through constriction 38 to tube section 40.

In preferred fluorescent lamps which have more than one constriction 38, a probe 10 may be located in proximity to each constriction 38. This implies that a probe will generally be located between 25-75% of the way along the discharge path. In general, the probe should have a portion which is positioned at between about 25-75% of the way along the discharge path, preferably about mid-way along the path.

FIG. 3 shows a lamp assembly including the probe 10 and cup 12 mounted within an exhaust tube 44 of a double twin tube lamp 42. The mercury vapour 46 is shown being liberated from the probe 10 during warm-up of the lamp. Embodiments of the present invention may be used with or without starter flags (not shown in FIG. 3) located near electrodes 48 and 50. If starter flags are located near the electrodes 48 and 50, during warm-up mercury will emanate from the probe 10 and the amalgam within the cup 12, as well as from the starter flags, thereby producing a quick and uniform distribution of the mercury vapour.

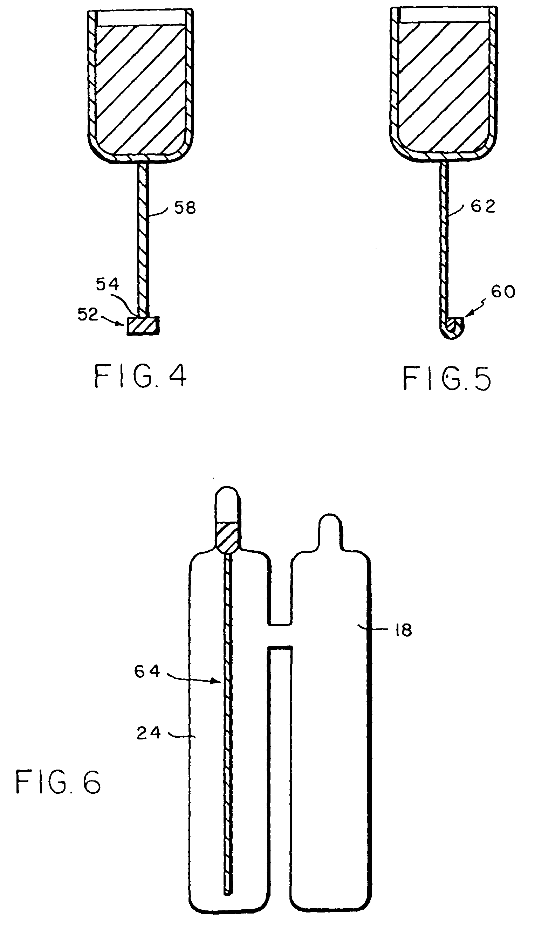

A second embodiment of the probe, as shown in FIG. 4, includes a small starter flag 52 attached to an end 54 of the probe 58 such that the flag is located in proximity to the constriction 38 in a twin tube or double twin tube lamp to take advantage of the relatively high temperature in this region. The starter flag 52 may be fabricated of a thin stainless steel foil or screen, preferably about 2 mm x 2 mm, and 0.5 to 3 mm in thickness. The flag 52 is preferably attached to the probe end by welding, although other means of attachment are suitable.

The flag is coated with an amalgamating alloy or metal, preferably indium, at a preferred thickness range of 1-2 mm. The probe and flag may be coated simultaneously using an ultrasonic soldering pot. A dipping technique may be used to apply the coatings as will be appreciated by those skilled in the art. Coating thicknesses may be altered by varying the withdrawal rate of the immersed parts. Because of its small size and thickness, the flag heats up quickly and provides a good source of mercury vapour.

A third embodiment of the probe is shown in FIG. 5. As shown, end 60 of probe 62 is bent, preferably into a U-shape (but any curve shape is suitable), to receive a deposit of indium. Like the embodiment shown in FIG. 4, the end 60 should be located in proximity to the constriction 38 to take advantage of the relatively high temperature in this region.

A fourth embodiment of the probe is shown in FIG. 6. A probe 64 extends nearly the full length of the tube section 24 of twin tube lamp 18. The probe is preferably indium coated and acts as a source of mercury vapour during lamp warm-up. Because the probe 64 extends nearly the full length of the tube section 24, mercury diffuses substantially evenly throughout the full length of the lamp during warm-up.

Table 1 below lists the warm-up times of a compact fluorescent lamp started at an ambient temperature of 25°C having (1) no starter flags or probe, (2) starter flags near the electrodes but no probe in accordance with the present invention, and (3) a probe in accordance with the present invention having a starter flag on the end thereof but no starter flags near the electrodes. The respective warm-up times were 12 minutes, 7 minutes and 2 minutes. The probe having a starter flag on the end thereof yielded the shortest warm-up time of 2 minutes. Those skilled in the art will appreciate that utilizing a probe having a starter flag on the end thereof in conjunction with starter flags located near the electrodes would further reduce the warm-up time and is, therefore, preferable.

**TABLE 1**

| | Lamp Description | Warm-Up Time |
|---|---|---|
| 1. | Amalgam but no starter flags or probe | 12 minutes |
| | | |
| 2. | Amalgam with starter flags near electrodes but no probe | 7 minutes |
| | | |
| 3. | Amalgam and probe with starter flag on end but no starter flags near electrodes | 2 minutes |

While embodiments of the present invention have been shown and described to include an indium coated probe attached to an alloy retaining cup which is mechanically held within an exhaust tube of a compact fluorescent lamp, it is envisioned that the probe can be press-sealed within a tube section of a compact fluorescent lamp. The probe can also be used in a U-shaped compact fluorescent lamp. Further, the present invention is not intended to be limited to electroded fluorescent lamps but to extend to situations where the fluorescent lamp is of the electrodeless variety.

Embodiments of the present invention may provide an improved high output compact fluorescent lamp; having a reduced warm-up time; and a device for reducing localized glowing during the warm-up period of the compact fluorescent lamp.

## Claims

1. A fluorescent lamp having an envelope (18) defining a continuous discharge path and a member (10;58;62;64) having a portion (10;52;60;64) positioned at an intermediate location along said discharge path adapted to liberate mercury vapour during warm-up of said lamp, characterised in that the member is elongate, and in that it is attached to a cup (12) containing an amalgam (16).

2. A lamp as claimed in claim 1 characterised in that said lamp comprises tube sections (24) which are connected by a constriction (38) and that said portion of said elongate member (10;52;60;64) is located in proximity to a constriction.

3. A lamp as claimed in claims 1 or 2 characterised in that at least said portion of elongate member (10;52;60;64) is coated with indium.

4. A lamp as claimed in claim 2 characterised in that said elongate member (10;58;62;64) is coated with indium and the indium is concentrated near the portion of said elongate member (10;52;60;64) in proximity to the constriction (38).

5. A lamp as claimed in any of claims 2 to 4 characterised in that said portion of said elongate member (62) in proximity to the constriction is curved for retaining indium.

6. A lamp as claimed in any of claims 2 to 5 characterised in that an indium coated starter flag (52) is attached to said elongate member (58) in proximity to the constriction (38).

7. A lamp as claimed in claim 6 characterised in that the flag (52) is made from a stainless steel foil.

8. A lamp as claimed in any of claims 2 to 7 characterised in that the elongate member extends substantially the full length of a tube section (24).

9. A lamp as claimed in any of the preceding claims characterised in that said cup (12) is mounted in an exhaust tube (20) of the lamp so that said elongate member extends into said lamp envelope.

10. A lamp as claimed in any of the preceding claims characterised in that said elongate member (10;58;62;64) is made from nickel-iron alloy.

## Patentansprüche

1. Leuchtstofflampe mit einer einen kontinuierlichen Entladungsweg definierenden Hülle (18) und mit einem Element (10; 58; 62; 64), das einen Abschnitt (10; 52, 60; 64) aufweist, der an einer Zwischenstation längs des Entladungswegs angeordnet und dafür eingerichtet ist, während des Aufwärmens der Lampe Quecksilberdampf freizusetzen, dadurch **gekennzeichnet**, daß das Element langgestreckt und mit einem Amalgam (16) enthaltenden Napf (12) verbunden ist.

2. Lampe nach Anspruch 1, dadurch **gekennzeichnet**, daß die Lampe Rohrabschnitte (24) aufweist, die durch eine Einengung (38) verbunden sind, und daß der genannte Abschnitt des langgestreckten Elements (10; 52; 60; 64) in der Nähe einer Einengung angeordnet ist.

3. Lampe nach Anspruch 1 oder 2, dadurch **gekennzeichnet**, daß zumindest ein Abschnitt des langgestreckten Elements (10, 52; 60, 64) mit Indium beschichtet ist.

4. Lampe nach Anspruch 2, dadurch **gekennzeichnet**, daß das langgestreckte Element (10; 58; 62; 64) mit Indium beschichtet ist und daß das Indium nahe dem Abschnitt des langgestreckten Elements (10; 52; 60; 64) in der Nähe der Einengung (38) konzentriert ist.

5. Lampe nach irgendeinem der Ansprüche 2 bis 4, dadurch **gekennzeichnet**, daß der der Einengung benachbarte Abschnitt des langgestreckten Elements (62) zur Bewahrung von Indium gebogen ist.

6. Lampe nach irgendeinem der Ansprüche 2 bis 5, dadurch **gekennzeichnet**, daß eine mit Indium beschichtete Zündfahne (52) in der Nähe der Einengung (38) am langgestreckten Element (58) befestigt ist.

7. Lampe nach Anspruch 6, dadurch **gekennzeichnet**, daß die Fahne (52) aus einer Folie aus rostfreiem Stahl hergestellt ist.

8. Lampe nach irgendeinem der Ansprüche 2 bis 7, dadurch **gekennzeichnet**, daß das langgestreckte Element sich im wesentlichen über die volle Länge eines Rohrabschnitts (24) erstreckt.

9. Lampe nach irgendeinem der vorhergehenden Ansprüche, dadurch **gekennzeichnet**, daß der Napf (12) in einem Pumpstengel (20) der Lampe montiert ist, derart, daß sich das langgestreckte Element in die Lampenhülle hineinerstreckt.

10. Lampe nach irgendeinem der vorhergehenden Ansprüche, dadurch **gekennzeichnet**, daß das langgestreckte Element (10; 58; 62; 64) aus einer Nickel-Eisen-Legierung hergestellt ist.

## Revendications

1. Lampe fluorescente comportant une ampoule (18) définissant un chemin continu de décharge, et un élément (10; 58; 62; 64) ayant une partie (10; 52; 60; 64) positionnée en un endroit intermédiaire dans le dit chemin de décharge et adaptée pour libérer de la vapeur de mercure pendant le chauffage de la dite lampe, caractérisée en ce que le dit élément affecte une forme allongée, et en ce qu'il est fixé à une coupe (12) contenant un amalgame (16).

2. Lampe selon la revendication 2, caractérisée en ce que la dite lampe comprend des parties tubulaires (24) qui sont reliées par une constriction (38) et en ce que la dite partie du dit élément de forme allongée (10; 52; 60; 64) est logée à proximité d'une constriction.

3. Lampe selon la revendication 1 ou 2, caractérisée en ce qu'au moins la dite partie de l'élément de forme allongée (10; 52; 60; 64) est revêtue avec de l'indium.

4. Lampe selon la revendication 2, caractérisée en ce que le dit élément de forme allongée (10; 58; 62; 64) est revêtu avec de l'indium et que l'indium est concentré près de la partie du dit élément de forme allongée (10; 52; 60; 64) à proximité de la constriction (38).

5. Lampe selon l'une quelconque des revendications 2 à 4, caractérisée en ce que la dite partie du dit élément de forme allongée (62) à proximité de la constriction est courbée pour retenir l'indium.

6. Lampe selon l'une quelconque des revendications 2 à 5, caractérisée en ce qu'un drapeau d'amorçage recouvert d'indium (52) est fixé au dit élément de forme allongée (58) à proximité de la constriction (38).

7. Lampe selon la revendication 6, caractérisée en ce que le drapeau (52) est réalisé à partir d'une feuille d'acier inoxydable.

8. Lampe selon l'une quelconque des revendications 2 à 7, caractérisée en ce que l'élément de forme allongée s'étend substantiellement sur toute la longueur d'une coupe (24) du tube.

9. Lampe selon l'une quelconque des revendications précédentes, caractérisée en ce que la dite coupe (12) est montée dans un queusot (20) de la lampe, de telle manière que le dit élément de forme allongée s'étend à l'intérieur de la dite ampoule de lampe.

10. Lampe selon l'une quelconque des revendications précédentes, caractérisée en ce que le dit élément de forme allongée (10; 58; 62; 64) est réalisé à partir d'un alliage nickel-fer.
